# EUROPÄISCHE PATENTANMELDUNG

(11) **EP 3 651 492 A1**
(43) Veröffentlichungstag der Anmeldung: **13.05.2020**
(21) Anmeldenummer: 18205345.4
(22) Anmeldetag: 09.11.2018
(51) Int. Cl.: H04W 28/02, H04L 12/851

(54) **PRIORISIERUNG DES DATENVERKEHRS IN EINEM PERSONAL AREA NETZWERK**

(71) Anmelder: Siemens Aktiengesellschaft, 80333 München (DE)
(72) Erfinder: Rittsteiger, Wolfgang, 2491 Steinbrunn (AT); Siljak, Nedzad, 1210 Wien (AT)
(74) Vertreter: Maier, Daniel Oliver

(57) **Zusammenfassung**

Die Erfindung betrifft ein Verfahren zur Priorisierung des Datenverkehrs in einem Personal Area Netzwerk (PAN; P), wobei das Personal Area Netzwerk (P) mehrere physische Geräte (D1, D2) umfasst, die durch einen gemeinsamen PAN-Koordinator (C) mit einem weiteren Netzwerk (I) verbunden sind. Um eine Priorisierung des Datenverkehrs im PAN zu erreichen, ist vorgesehen,
- dass im PAN-Koordinator (C) für zumindest zwei Gerätetypen jeweils eine individuelle Priorität für den Datenverkehr hinterlegt ist,
- dass der PAN-Koordinator (C) die Identifikation der Geräte (D1, D2) einliest, die sich im PAN (P) anmelden wollen, und an einen außerhalb des PAN (P) liegenden Zentralrechner (NM) übermittelt,
- dass der PAN-Koordinator (C) vom Zentralrechner (NM) im Zuge der Freigabe zur Anmeldung des Geräts (D1, D2) auch den, der Identifikation entsprechenden Gerätetyp des Geräts empfängt,
- dass der PAN-Koordinator (C) dem Gerät (D1, D2) aufgrund des Gerätetyps eine Priorität für den Datenverkehr zuordnet, und
- dass der PAN-Koordinator (C) das Senden von Datenpaketen innerhalb des PAN (P) entsprechend der Priorität des jeweiligen Geräts veranlasst.

## Beschreibung

### GEBIET DER ERFINDUNG

Die Erfindung betrifft ein Verfahren zur Priorisierung des Datenverkehrs in einem Personal Area Netzwerk (PAN), unter Verwendung zumindest eines Rechners, wobei das Personal Area Netzwerk mehrere physische Geräte umfasst, die durch einen gemeinsamen PAN-Koordinator mit einem weiteren Netzwerk verbunden sind.

Das Verfahren kann beispielsweise für das sogenannte Internet der Dinge (engl. Internet of Things, IoT) verwendet werden.

### STAND DER TECHNIK

Das Internet der Dinge ist ein Sammelbegriff für Technologien, die es ermöglichen, physische Gegenstände (z.B. Geräte, Sensoren) und virtuelle Gegenstände (Steuerprogramme, Überwachungsprogramme) miteinander zu vernetzen, damit diese miteinander kommunizieren können. Das Vernetzen zwischen physischen und virtuellen Gegenständen findet dabei über ein Daten- und Computernetzwerk statt, in der Regel unter Einbeziehung des Internets.

Es können so Informationen von den physischen Gegenständen im Netzwerk abgerufen werden, dafür reicht eine Identifikation des physischen Gegenstandes, beispielsweise mittels RFID oder QR-Code, aus. Ein zentrales System, das in der Regel örtlich vom physischen Gegenstand entfernt ist, kann so die für den Nutzer relevanten Daten zur Verfügung stellen. Die physischen Gegenstände können aber auch so ausgebildet sein, dass sie selbst Information verarbeiten, sie müssen dann also über eine entsprechende Hardware verfügen, in der Regel über zumindest einen Prozessor oder Mikrocontroller. Die Hardware sollte eine hohe Zuverlässigkeit aufweisen, weil eine hohe Ausfallrate Wartungsarbeiten an sehr vielen Geräten nötig machen würde, die mitunter räumlich voneinander entfernt oder schwer zu erreichen sind. Zusätzlich sollte der Energieverbrauch sehr niedrig sein, da die Hardware in der Regel ständig im Betrieb ist. Integrierte Lösungen wie zum Beispiel ein System-on-a-Chip erfüllen diese Anforderungen.

Softwareseitig sollte ein Betriebssystem mit einem niedrigen Speicherbedarf verwendet werden, das einen Netzwerkstack zur Kommunikation zur Verfügung stellt.

In der Regel gibt es beim Internet of Things zwei verschiedene Bereiche, in denen Software ausgeführt wird und in denen Daten übertragen werden, wobei zwischen diesen beiden Bereichen eine Datenübertragung stattfindet. Ein Bereich ist das Internet, welches IT-Infrastruktur, wie beispielsweise Speicherplatz, Rechenleistung oder Anwendungssoftware, als Dienstleistung zur Verfügung stellt, eben die oben genannten virtuellen Gegenstände. Der zweite Bereich, in dem Software ausgeführt werden kann, betrifft das Netzwerk, das die physischen Gegenstände untereinander verbindet. Es wird als Personal Area Netzwerk (PAN) bezeichnet. Das PAN ist ein Netz, das von Kleingeräten, wie Mobiltelefonen, Messgeräten oder Sensoren, ad hoc auf- und abgebaut werden kann, eben von den oben genannten physischen Gegenständen des Internets der Dinge. PANs können drahtgebunden, z.B. über USB, FireWire, Powerline Communication, oder drahtlos (engl. wireless, WPAN), z.B. über Infrarot (IrDA) oder Bluetooth, aufgebaut werden. Die Reichweite beträgt gewöhnlich nur wenige Meter. PANs können genutzt werden, um mit den Geräten untereinander zu kommunizieren, sie können aber in der Regel mittels einer entsprechenden Anbindung (Uplink) auch mit einem übergeordneten Netz kommunizieren, eben mit dem Internet, genauer entweder über das Internet oder direkt mit einer bestimmten zentralen Datenverarbeitung, wie einer IT-Zentrale, verbunden sein. Die Ressourcen, wie Speicher, Rechenleistung und Bandbreite für Datenübertragung, des PAN sind begrenzt.

Es ist deshalb notwendig, eine Priorisierung des Datenverkehrs im PAN vorzusehen, um das Internet der Dinge zu verwirklichen und mit der niedrigen und/oder unzuverlässigen Datenrate auszukommen. Dazu muss eine Unterscheidung von dringendem und nicht dringendem Datenverkehr getroffen werden.

Zwar werden in vielen PANs bereits Netzwerkstacks (Protokollstacks) verwendet, die wenige Ressourcen benötigen, damit verbunden ist aber auch ein begrenzter Funktionsumfang des Netzwerkstacks, sodass Funktionen, wie Priorisierung des Datenverkehrs, nicht genutzt werden können.

In einem PAN teilen sich alle Teilnehmer das gleiche Kommunikationsmedium und werden über einen PAN-Koordinator, auch Edge-Router genannt, mit einem größeren Netz, meist dem Internet, bzw. mit einer bestimmten zentralen Datenverarbeitung verbunden, wie einer IT-Zentrale. Diese zentrale Datenverarbeitung hat für jede Anwendung typischer Weise eine dezidierte Funktionseinheit. So wird z.B. für Anwendungen für das intelligente Stromnetz (sogenannte Smart Grid Anwendungen) die Anwendung zur intelligenten Strommessung (Smart Metering) über das sogenannte Head-End-System und das Meter-Data-Management verwaltet, während die Anwendung zur Netzregelung, das den Zustand des Niederspannungsnetzes überwacht, im sogenannten SCADA-System verwaltet wird. Das bedeutet, dass die Anwendung zur intelligenten Strommessung unabhängig von der Anwendung zur Netzregelung durchgeführt wird. Das stellt für die Priorisierung des Datenverkehrs eine Herausforderung dar, weil es meist keine Koordination zwischen diesen Anwendungen gibt und eine etwaige Priorisierung des Datenverkehrs auf der Ebene des Internets bzw. der IT-Zentrale erfolgen müsste, was mit entsprechendem Entwicklungsaufwand verbunden wäre.

Es gibt Lösungen, wo eine Priorisierung des Datenverkehrs mit Verfahren durchgeführt wird, die im Internet-Protokoll (IP) definiert sind, z.B. sogenannte "Traffic Class" Verfahren. Für den Anwender ist dies in den meisten Fällen aber nicht praktikabel, weil die unterschiedlichen Anwendungen in der IT-Zentrale dabei nicht miteinander verknüpft sind, diese Anwendungen somit nachgerüstet werden müssten, was wie gesagt mit hohem Aufwand verbunden wäre.

### DARSTELLUNG DER ERFINDUNG

Es ist somit eine Aufgabe der Erfindung, ein Verfahren zur Priorisierung des Datenverkehrs in einem Personal Area Netzwerk (PAN) anzugeben, mit welchem ohne Einbindung des Internets bzw. einer dem Personal Area Netzwerk zugeordneten IT-Zentrale eine Priorisierung erfolgen kann.

Diese Aufgabe wird durch ein Verfahren nach Anspruch 1 gelöst, welches ein Verfahren zur Priorisierung des Datenverkehrs in einem Personal Area Netzwerk unter Verwendung eines Rechners betrifft, wobei das Personal Area Netzwerk mehrere physische Geräte umfasst, die durch einen gemeinsamen PAN-Koordinator mit einem weiteren Netzwerk verbunden sind. Erfindungsgemäß ist vorgesehen,
- dass im PAN-Koordinator für zumindest zwei Gerätetypen jeweils eine individuelle Priorität für den Datenverkehr hinterlegt ist,
- dass der PAN-Koordinator die Identifikation der Geräte einliest, die sich im PAN anmelden wollen, und an einen außerhalb des PAN liegenden Zentralrechner übermittelt,
- dass der PAN-Koordinator vom Zentralrechner im Zuge der Freigabe zur Anmeldung des Geräts auch den, der Identifikation entsprechenden Gerätetyp des Geräts empfängt,
- dass der PAN-Koordinator dem Gerät aufgrund des Gerätetyps eine Priorität für den Datenverkehr zuordnet, und
- dass der PAN-Koordinator das Senden von Datenpaketen innerhalb des PAN entsprechend der Priorität des jeweiligen Geräts veranlasst.

Die Erfindung macht sich die Tatsache zunutze, dass in einem PAN für das Internet der Dinge die einzelnen Geräte in der Regel auf eine bestimmte Anwendung oder Aufgabe spezialisiert sind und damit jede Kommunikation mit diesen Geräten im Hinblick auf den Datenverkehr in eine, über die Zeit gleichbleibende Prioritätsstufe eingeordnet werden kann.

Weiters wird die Tatsache ausgenutzt, dass PANs von PAN-Koordinatoren verwaltet werden. Wenn sich ein Gerät im PAN anmelden möchte, so muss es durch eine Instanz in einer IT-Zentrale authentifiziert und autorisiert werden. Im Zuge dieses Anmeldeprozesses wird nun erfindungsgemäß der Gerätetyp des Geräts von der IT-Zentrale zum PAN-Koordinator übertragen. Dieser kann dann die Priorisierung des Datenverkehrs entsprechend der im PAN-Konfigurator hinterlegten Konfigurationen vornehmen.

Ein PAN-Koordinator eines PAN, insbesondere eines drahtlosen Sensor-Netzwerks (engl. Wireless Sensor Networks, WSN) ist eine zentrale Station, die die Netzsteuerung der physischen Geräte des Netzwerks übernimmt. Die physischen Geräte, im Folgenden Geräte, können dabei sogenannte Full Function Devices (FFD) und Reduced Function Devices (RFD) umfassen. Jedes PAN hat, jedenfalls sofern nach IEEE 802.15.4 aufgebaut, nur einen PAN-Koordinator, der Routingfunktionen und die Kommunikation mit den angeschlossenen FFD- oder RFD-Geräten (auch FFD- oder RFD-Stationen genannt) übernimmt. Der PAN-Koordinator bestimmt die Topologie des Netzes, startet das Netzwerk mit festgelegten Parametern und teilt anfragenden Geräten über die Guaranteed Time Slots (GTS) eine Bandbreite zu.

FFD-Geräte unterstützen alle Topologien, kommunizieren mit PAN-Koordinatoren und anderen FFD-Geräten sowie mit den RFD-Geräten. Sie unterstützen den kompletten Protokollsatz und können daher in kleinen Netzen ohne PAN-Koordinator die Funktionen des PAN-Koordinators übernehmen. RFD-Geräte sind Geräte, meist Endknoten, mit eingeschränkter Funktionalität, äußerst einfacher Implementierung und reduziertem Protokollsatz. Zudem können sie nur mit FFD-Geräten oder mit den PAN-Koordinatoren kommunizieren. Typische RFD-Geräte sind Sensoren und Aktoren, die über die FFD-Geräte abgefragt werden oder eine einfache Steuerfunktion ausführen. Zu den RFD-Geräten zählen z.B. Schalter und Stellregler und Sensoren. Da RFD-Geräte nur selten aktiv werden, befinden sie sich die meiste Zeit in einem Energie-sparenden Schlafmodus.

Eine Ausführungsform der Erfindung besteht darin, dass die Priorität der einzelnen Gerätetypen für den Datenverkehr vom Anwender festgelegt wird. Der PAN-Koordinator könnte bei seiner Konfiguration oder bei seinem erstmaligen Start den Anwender zur Eingabe der Prioritäten der einzelnen Gerätetypen auffordern. Ein Anwender könnte auch in der IT-Zentrale die Zuordnung zwischen Gerätetypen und Priorität hinterlegen. Die PANs würden diese dann jeweils von dort beziehen.

Eine Ausführungsform der Erfindung besteht darin, dass die Identifikation der Geräte deren physische Adresse ist. Die physische Adresse ist die Hardware-Adresse jedes einzelnen Geräts, die als eindeutiger Identifikator des Geräts in einem Rechnernetz dient. Sie wird auch als MAC-Adresse (Media-Access-Control-Adresse) oder Geräteadresse bezeichnet. Eine Zuordnung zwischen MAC-Adresse und Gerätetype kann mittels sogenannter "Shipmentlisten" erfolgen.

Grundsätzlich kann das erfindungsgemäße Verfahren mit verschiedenen drahtgebundenen oder drahtlosen PANs verwirklicht werden. Insbesondere wenn die Geräte des PAN Aufgaben im Niederspannungsnetz übernehmen sollen, kann vorgesehen sein, dass mehrere, insbesondere alle, Geräte des PAN mittels Powerline Communication miteinander kommunizieren.

Powerline Communication (PLC), PowerLAN, oder kurz Powerline, bezeichnet eine Technik, die vorhandene elektrische Leitungen im Niederspannungsnetz zum Aufbau eines lokalen Netzwerks zur Datenübertragung nutzt, so dass keine zusätzliche Verkabelung notwendig ist. Die Signale werden dabei über eine oder mehrere Trägerfrequenzen zusätzlich auf die vorhandene elektrische Leitung moduliert.

Eine andere Ausführungsvariante der Erfindung besteht darin, dass das PAN ein Low Power Wireless Netzwerk umfasst.

Ein sogenanntes Low Power Wireless Netzwerk minimiert seinen Energiebedarf, indem die einzelnen Geräte des Netzwerks nicht ständig aktiv sind, sondern aktive Phasen mit höherem Energiebedarf und Phasen reduzierter Aktivität (z.B. Standby Modus) mit niedrigerem Energiebedarf abwechseln. So könnte etwa ein Gerät in Form eines Temperatursensors im aktiven Modus Energie aufnehmen, um, z.B. mit Hilfe seines Mikrocontrollers, Temperaturwerte zu messen und zu filtern, und dann wieder in den Sleep- oder Standby Modus gehen, bis die nächste Temperaturmessung durchzuführen ist. In vorgegebenen Zeitabständen könnte das Gerät aktiv werden und abfragen, ob eine Aufgabe zu erledigen ist. Wenn nicht, geht das Gerät bzw. dessen Mikrocontroller wieder in den Sleep- oder Standby Modus über. Wenn also die aktive Zeit des Geräts bzw. dessen Mikrocontrollers entsprechend gesteuert wird, kann die Energieaufnahme des gesamten PAN entsprechend reduziert werden.

Ein Low Power Wireless Netzwerk im Sinne der Erfindung liegt auch dann vor, wenn nur einige Geräte des PAN nicht ständig aktiv sind, sondern aktive Phasen mit höherem Energiebedarf und Phasen reduzierter Aktivität mit niedrigerem Energiebedarf abwechseln. So könnte etwa vorgesehen sein, dass nur ein Gerätetyp des PAN diese Kriterien erfüllt, während ein anderer Gerätetyp diese Kriterien nicht erfüllt, und dass PAN zumindest aus zwei verschiedenen Gerätetypen besteht.

Es wäre auch denkbar, dass ein PAN mit einem PAN-Koordinator mehrere Arten der Datenübertragung, im Sinne eines hybriden Kommunikationsnetzes, verwendet, also z.B. einige Geräte des PAN, z.B. eines Gerätetyps, mittels Powerline Communication miteinander kommunizieren, während andere Geräte des gleichen PAN in Form eines Low Power Wireless Netzwerks miteinander verbunden sind.

Da das erfindungsgemäße Verfahren auf bzw. mit einem Rechner (Computer) ausgeführt wird, umfasst die Erfindung auch ein entsprechendes Computerprogrammprodukt, welches wiederum Befehle umfasst, die bei der Ausführung des Programms durch einen PAN-Koordinator diesen veranlassen, alle Schritte des erfindungsgemäßen Verfahrens auszuführen. Das Computerprogrammprodukt kann beispielsweise ein Datenträger sein, auf welchem ein entsprechendes Computerprogramm gespeichert ist, oder es kann ein Signal oder Datenstrom sein, der über eine Datenverbindung in den Prozessor eines Rechners (Computers) geladen werden kann.

Das Computerprogramm kann also folgende Schritte veranlassen bzw. selbst durchführen:
- dass im PAN-Koordinator für zumindest zwei Gerätetypen jeweils eine individuelle Priorität für den Datenverkehr hinterlegt ist bzw. wird,
- dass der PAN-Koordinator die Identifikation der Geräte einliest, die sich im PAN anmelden wollen, und an einen außerhalb des PAN liegenden Zentralrechner übermittelt,
- dass der PAN-Koordinator vom Zentralrechner im Zuge der Freigabe zur Anmeldung des Geräts auch den, der Identifikation entsprechenden Gerätetyp des Geräts empfängt,
- dass der PAN-Koordinator dem Gerät aufgrund des Gerätetyps eine Priorität für den Datenverkehr zuordnet, und
- dass der PAN-Koordinator das Senden von Datenpaketen innerhalb des PAN entsprechend der Priorität des jeweiligen, z.B. des empfangenden, Geräts veranlasst. Dies bedeutet, dass der PAN-Koordinator Datenpakete mit niedrigerer Priorität entsprechend lange zurückhält, bis ausreichende Kommunikationsressourcen für diese bereitstehen.

Die vorliegende Erfindung hat den Vorteil, dass weder an den einzelnen Geräten des PAN noch in der IT-Zentrale (einem Zentralrechner) zwingend Änderungen vorgenommen werden müssen, um eine Priorisierung des Datenverkehrs im PAN zu erreichen. Dies ist für den Anwender sehr bequem, der nur in den PAN-Koordinator zusätzliche Daten eingeben muss. Natürlich findet in der IT-Zentrale eine generelle Konfiguration aller PANs statt, welche dieser IT-Zentrale zugeordnet sind. Im Zuge dessen kann auch die Priorisierung der Gerätetypen in den einzelnen PANs erfolgen und während der Geräteprovisionierung den PAN-Koordinatoren zugewiesen werden.

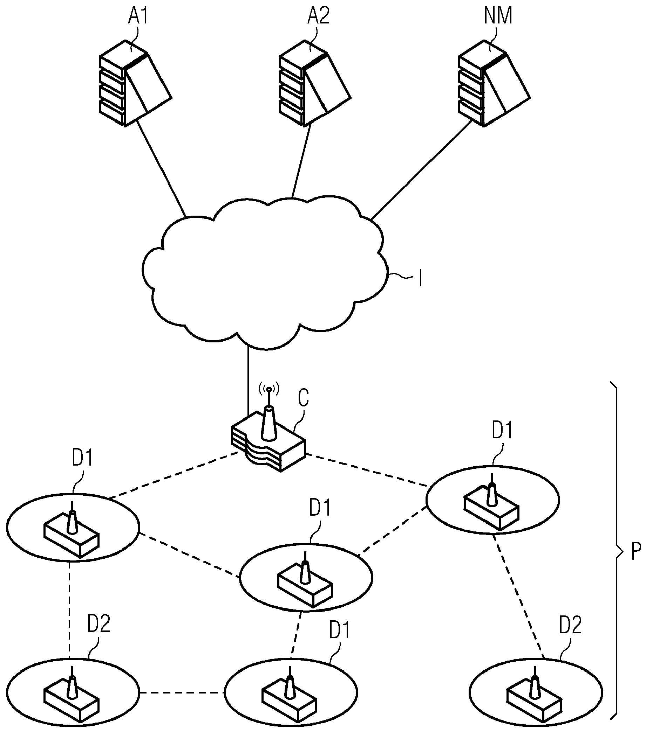

### KURZE BESCHREIBUNG DER FIGUR

Zur weiteren Erläuterung der Erfindung wird im nachfolgenden Teil der Beschreibung auf die Figur Bezug genommen, aus der weitere vorteilhafte Einzelheiten und mögliche Einsatzgebiete der Erfindung zu entnehmen sind. Dabei zeigt die Figur ein Schema eines PAN, das über das Internet mit einer IT-Zentrale verbunden ist.

### WEGE ZUR AUSFÜHRUNG DER ERFINDUNG

Die Figur zeigt mit dem Bezugszeichen P ein PAN, das zwei Typen von physischen Geräten D1, D2 umfasst, und zwar jeweils mehrere Geräte eines Typs. Die Geräte D1, D2 sind untereinander und mit dem PAN-Koordinator C drahtlos verbunden, was durch die kleinen Antennen auf den Geräten D1, D2 und dem PAN-Koordinator C dargestellt ist. Der PAN-Koordinator C ist, hier drahtlos, mit dem Internet I verbunden, an welchem wieder die dem PAN zugeordnete IT-Zentrale angebunden ist. Selbstverständlich wäre statt der drahtlosen Verbindung zum Internet auch eine drahtgebundene Verbindung möglich. Die IT-Zentrale verfügt über Rechner, auf welchen unter anderem eine erste Anwendung A1, eine zweite Anwendung A2 und eine Anwendung NM zum Netzwerkmanagement (engl. Network Management) ausgeführt werden kann. Mit der Anwendung NM zum Netzwerkmanagement kann etwa die Kommunikation mit dem PAN verwaltet und überwacht werden.

Im PAN-Koordinator C kann der Anwender oder das zentrale IT-System eine Liste mit Gerätetypen und deren Prioritäten für den Datenverkehr hinterlegen. Der PAN-Koordinator C kann etwa beim erstmaligen Start des PAN den Anwender und/oder das zentrale IT-System auffordern, die Liste zu befüllen. Während des Betriebs des PAN können der Anwender und/oder das zentrale IT-System auch Änderungen an der Liste vornehmen.

Möchte ein Gerät D1, z.B. ein intelligenter Stromzähler, dem PAN P beitreten, so muss er seine EUI-64 oder MAC-Adresse dem PAN-Koordinator C vorweisen. Dieser Ablauf wird in verschiedenen Standards, wie IEEE802.15.4, als sogenanntes "Bootstrapping" beschrieben.

Der PAN-Koordinator C kontaktiert darauf in seiner Funktion als Edge-Router einen Zentralrechner, z.B. das Netzwerk-Management NM, übersendet die Adresse des Geräts D1, D2, und das Netzwerk-Management NM teilt dann dem PAN-Koordinator C mit, ob das Gerät D1, D2 angemeldet werden darf oder nicht. Des Weiteren übermittelt das Netzwerk-Management NM die Information, um welchen Gerätetyp es sich bei dem Gerät D1, D2 handelt. Der PAN-Koordinator C vergibt nun dem Gerät D1, D2 eine Netzwerk-Adresse, im Falle von 6lowPAN Netzen die IPv6-Adresse, und trägt die Prioritätsnummer in seine Listenverwaltung ein. Alle Datenpakete, die für das PAN bestimmt sind, werden entsprechend der Zieladresse, also der Netzwerk-Adresse des jeweiligen Geräts D1, D2, und der für diese Netzwerkadresse bzw. dieses Gerät D1, D2 vergebenen Prioritätsnummer gereiht und entsprechend dieser Reihenfolge in das PAN P gesendet.

Das gegenständliche PAN P kann etwa ein intelligentes Stromnetz (englisch smart grid) betreffen. Dieses umfasst die kommunikative Vernetzung und Steuerung von Stromerzeugern, Speichern, elektrischen Verbrauchern und Netzbetriebsmitteln in Energieübertragungs- und -verteilungsnetzen der Elektrizitätsversorgung. Die Geräte D1 wären dann intelligente Stromzähler (Smart Meter), ihre Daten würden dann von der ersten Anwendung A1 zur intelligenten Strommessung (Smart Metering) verwendet werden. Die Geräte D2 könnten dann Schalter oder Stellregler sein, mit denen die Energie im Energieverteilungsnetz verteilt wird. Die Geräte D2 würden dann von der zweiten Anwendung A2 zur Netzregelung, einem SCADA-System, gesteuert werden.

SCADA bedeutet Supervisory Control and Data Acquisition, man versteht darunter das Überwachen und Steuern technischer Prozesse mittels eines Computer-Systems. SCADA-Systeme überwachen, visualisieren, steuern und regeln einen Bereich des Niederspannungsnetzes. Die Regelung erfolgt großteils automatisiert, etwa durch Fernbedienungsterminals oder durch Speicherprogrammierbare Steuerungen (SPS). Die Automatisierung wird entsprechend dem OSI-Schichtenmodell in mehrere Schichten oder Levels unterteilt.

Level 1 ist die prozessnahe Schicht. Die Aufgabe der Level-2-Automatisierung ist es, die Funktion der Level-1-Automatisierung zu optimieren, sowie Stellgrößen und Sollwerte auszugeben. Die Level-3-Automatisierung dient hingegen der Planung, Qualitätssicherung und Dokumentation. Die Datenerfassung beginnt gewöhnlich mit dem Level 1 und enthält die Koppelung an Messgeräte und Statusinformationen wie Schalterstellungen, etwa die Stellung der Schalter der Geräte D2, die von dem SCADA-System erfasst werden. Die Daten werden dann in einer benutzerfreundlichen Darstellung präsentiert und ermöglichen es, steuernd in den Prozess einzugreifen. Das SCADA-System kann dann über Level 2 dem Gerät D2 eine neue Schalterstellung vorgeben.

### Bezugszeichenliste:

- A1: Anwendung
- A2: Anwendung
- C: PAN-Koordinator
- D1: Gerät
- D2: Gerät
- I: Internet
- NM: Netzwerk-Management (Zentralrechner)
- P: Personal Area Network

## Patentansprüche

1. Verfahren zur Priorisierung des Datenverkehrs in einem Personal Area Netzwerk (PAN; P), unter Verwendung zumindest eines Rechners, wobei das Personal Area Netzwerk (P) mehrere physische Geräte (D1, D2) umfasst, die durch einen gemeinsamen PAN-Koordinator (C) mit einem weiteren Netzwerk (I) verbunden sind, **dadurch gekennzeichnet,**
- **dass** im PAN-Koordinator (C) für zumindest zwei Gerätetypen jeweils eine individuelle Priorität für den Datenverkehr hinterlegt ist,
- **dass** der PAN-Koordinator (C) die Identifikation der Geräte (D1, D2) einliest, die sich im PAN (P) anmelden wollen, und an einen außerhalb des PAN (P) liegenden Zentralrechner (NM) übermittelt,
- **dass** der PAN-Koordinator (C) vom Zentralrechner (NM) im Zuge der Freigabe zur Anmeldung des Geräts (D1, D2) auch den, der Identifikation entsprechenden Gerätetyp des Geräts empfängt,
- **dass** der PAN-Koordinator (C) dem Gerät (D2, D2) aufgrund des Gerätetyps eine Priorität für den Datenverkehr zuordnet, und
- **dass** der PAN-Koordinator (C) das Senden von Datenpaketen innerhalb des PAN (P) entsprechend der Priorität des jeweiligen Geräts veranlasst.

2. Verfahren nach Anspruch 1, **dadurch gekennzeichnet, dass** die Priorität der einzelnen Gerätetypen für den Datenverkehr vom Anwender festgelegt wird.

3. Verfahren nach Anspruch 1 oder 2, **dadurch gekennzeichnet, dass** die Identifikation der Geräte (D1, D2) deren physische Adresse ist.

4. Verfahren nach einem der vorhergehenden Ansprüche, **dadurch gekennzeichnet, dass** mehrere, insbesondere alle, Geräte (D1, D2) des PAN (P) mittels Powerline Communication miteinander kommunizieren.

5. Verfahren nach einem der vorhergehenden Ansprüche, **dadurch gekennzeichnet, dass** das PAN (P) ein Low Power Wireless Netzwerk umfasst.

6. Computerprogrammprodukt, umfassend Befehle, die bei der Ausführung des Programms durch einen PAN-Koordinator diesen veranlassen, alle Schritte des Verfahrens nach einem der Ansprüche 1 bis 5 auszuführen.
